# EUROPÄISCHE PATENTANMELDUNG

(11) **EP 2 562 038 A1**
(43) Veröffentlichungstag der Anmeldung: **27.02.2013**
(21) Anmeldenummer: 12173529.4
(22) Anmeldetag: 26.06.2012
(51) Int. Cl.: B60Q 1/08, H05B 37/02, F21V 23/04, F21S 8/08, G08G 1/16

(54) **Verfahren und Steuergerät zum Hervorheben eines erwarteten Bewegungspfads eines Fahrzeugs**

(30) Priorität: 23.08.2011 DE 102011081394
(71) Anmelder: ROBERT BOSCH GMBH, 70442 Stuttgart (DE)
(72) Erfinder: Nordbruch, Stefan, 70806 Kornwestheim (DE); Galbas, Roland, 71640 Ludwigsburg (DE); Ruehle, Armin, 71384 Weinstadt (DE)

(57) **Zusammenfassung**

Die Erfindung betrifft ein Verfahren zum Hervorheben eines erwarteten Bewegungspfads (404) eines Fahrzeugs (100), wobei das Verfahren einen Schritt des Ermittelns einer Verkehrssituation unter Verwendung einer Information über ein Umfeld des Fahrzeugs (100) umfasst. Ferner umfasst das Verfahren einen Schritt des Bestimmens des erwarteten Bewegungspfads (404) basierend auf der Verkehrssituation. Weiterhin umfasst das Verfahren einen Schritt des Bereitstellens eines Steuersignals zum Ansteuern einer Fahrbahnmarkierungsvorrichtung (115) unter Verwendung des Bewegungspfads (404), um den erwarteten Bewegungspfad (404) hervorzuheben.

## Beschreibung

### Stand der Technik

Die vorliegende Erfindung bezieht sich auf ein Verfahren zum Hervorheben eines erwarteten Bewegungspfads eines Fahrzeugs, auf ein Steuergerät zum Hervorheben eines erwarteten Bewegungspfads eines Fahrzeugs sowie auf ein entsprechendes Computerprogrammprodukt.

Bewegen sich mehrere Verkehrsteilnehmer auf einer mehrspurigen Straße, so können durch das Verhalten der einzelnen Verkehrsteilnehmer gefährliche Situationen entstehen. Eine gefährliche Situation kann sich beispielsweise daraus ergeben, dass einer der Verkehrsteilnehmer unvermittelt seine Spur verlässt und auf eine andere Spur wechselt. Herkömmliche Fahrzeuge weisen daher eine Einrichtung zur Fahrtrichtungsanzeige (Blinker) auf, um anderen Verkehrsteilnehmern einen optischen Hinweis auf einen bevorstehenden Richtungswechsel oder Spurwechsel zu geben.

Das Dokument DE 102 54 806 B4 zeigt ein Verfahren zur Informationsverarbeitung von wenigstens zwei Informationsquellen in einem Kraftfahrzeug.

### Offenbarung der Erfindung

Vor diesem Hintergrund wird mit der vorliegenden Erfindung ein Verfahren zum Hervorheben eines erwarteten Bewegungspfads eines Fahrzeugs, weiterhin ein Steuergerät zum Hervorheben eines erwarteten Bewegungspfads eines Fahrzeugs sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Die Erfindung basiert auf der Erkenntnis, dass die Aufmerksamkeit anderer Verkehrsteilnehmer für zukünftige Aktionen eines Fahrzeugs verbessert werden kann, wenn ein Verkehrsraum, der zukünftig von dem Fahrzeug belegt werden wird, optisch hervorgehoben wird.

Bei einem Ausweichmanöver kann ein ausweichendes Fahrzeug seine Spur so schnell verlassen, dass herkömmliche Fahrtrichtungsanzeiger keinen Informationsgewinn für die anderen Verkehrsteilnehmer bringen können. In diesem Fall kann ein von dem Fahrzeug aufgrund des Ausweichmanövers zurückzulegender Pfad mittels einer Fahrbahnmarkierungsvorrichtung markiert werden. Durch Hervorheben des voraussichtlichen Pfads kann eine unmittelbare Information über den unmittelbar bevorstehenden Bewegungspfad des Fahrzeugs an andere Verkehrsteilnehmer übermittelt werden. Beispielsweise kann im Fall einer Notfallreaktion seitens eines Fahrerassistenzsystems, ein von dem Fahrerassistenzsystem vorgesehener Bewegungspfad des Fahrzeugs für andere Verkehrsteilnehmer im Umfeld des Fahrzeugs sichtbar gemacht werden.

Außerdem kann der Fahrer des Fahrzeugs durch das Hervorheben eines von einem Fahrerassistenzsystem vorgeschlagenen Fahrpfads in einer schwierigen Verkehrssituation darin unterstützt werden, intuitiv richtig auf den Vorschlag zu reagieren.

Die vorliegende Erfindung schafft ein Verfahren zum Hervorheben eines erwarteten Bewegungspfads eines Fahrzeugs, wobei das Verfahren die folgenden Schritte umfasst:
Ermitteln einer Verkehrssituation unter Verwendung einer Information über ein Umfeld des Fahrzeugs;
Bestimmen des erwarteten Bewegungspfads basierend auf der Verkehrssituation; und
Bereitstellen eines Steuersignals zum Ansteuern einer Fahrbahnmarkierungsvorrichtung unter Verwendung des Bewegungspfads, um den erwarteten Bewegungspfad hervorzuheben.

Unter einem erwarteten Bewegungspfad kann eine geplante Trajektorie verstanden werden, die basierend auf durch ein Umfeld des Fahrzeugs vorgegebenen Rahmenbedingungen und Parametern des Fahrzeugs ermittelt werden kann. Eine Verkehrssituation kann zum einen auf einen Straßenverlauf und zum anderen auf andere Verkehrsteilnehmer im Umfeld des Fahrzeugs repräsentieren. Beispielsweise kann die Verkehrssituation den Verlauf zumindest eines Verkehrskorridors im Umfeld des Fahrzeugs, beispielsweise den Verlauf einer Straße, abbilden. Ebenso kann die Verkehrssituation Grenzen des Verkehrsraums im Umfeld des Fahrzeugs, beispielsweise Hindernisse abbilden. Die Verkehrssituation kann auch den Verkehr im Umfeld des Fahrzeugs, beispielsweise Position, Richtung und Geschwindigkeit von Fremdfahrzeugen abbilden. Auch kann die Verkehrssituation eine lokale Wetterlage und ihre Auswirkungen abbilden. Der erwartete Bewegungspfad kann die in der Verkehrssituation abgebildeten Rahmenbedingungen berücksichtigen und beispielsweise an Hindernissen und Fremdfahrzeugen mit einem Sicherheitsabstand vorbeiführen. Das Steuersignal kann an einer Schnittstelle zu der Fahrbahnmarkierungsvorrichtung bereitgestellt werden, um die Fahrbahnmarkierungsvorrichtung entsprechend dem Steuersignal anzusteuern. Die Fahrbahnmarkierungsvorrichtung kann ausgebildet sein, um den erwarteten Bewegungspfad sowohl für den Fahrer des Fahrzeugs als auch für andere Verkehrsteilnehmer sichtbar darzustellen. Die Fahrbahnmarkierungsvorrichtung kann eine oder mehrere Lichtquellen aufweisen, die durch das Steuersignal angesteuert werden können, um den erwarteten Bewegungspfad hervorzuheben oder auszuleuchten. Zur Hervorhebung des Bewegungspfads kann beispielsweise auf bekannte Techniken, wie Kurvenlicht oder gleitendes Licht zurückgegriffen werden. Der erwartete Bewegungspfad kann dann hervorgehoben werden, wenn dies für den Fahrer und/oder für andere Verkehrsteilnehmer als sinnvoll erscheint. Ferner kann der erwartete Bewegungspfad dann hervorgehoben werden, wenn der erwartete Bewegungspfad mit einer vorgegebenen Wahrscheinlichkeit den tatsächlichen, zukünftigen Bewegungspfad des Fahrzeugs kennzeichnet. Diese Entscheidungen können mit Hilfe von vorgegebenen Entscheidungskriterien basierend auf der Verkehrssituation bestimmt werden. Das Verfahren zum Hervorheben eines erwarteten Bewegungspfads eines Fahrzeugs kann von einer geeigneten Vorrichtung des Fahrzeugs oder von einer fahrzeugexternen Vorrichtung umgesetzt werden.

Das Steuersignal kann dazu ausgebildet sein, zumindest ein Scheinwerfer des Fahrzeugs als die Fahrbahnmarkierungsvorrichtung anzusteuern. Bei dem Scheinwerfer kann es sich um den oder die Hauptscheinwerfer des Fahrzeugs handeln. In diesem Fall kann der Hauptscheinwerfer ein Lichtmuster abstrahlen, das den Bewegungspfad auf der Straße abbildet. Alternativ oder zusätzlich kann der Scheinwerfer ein zusätzlich zu dem Hauptscheinwerfer vorhandener eigenständiger Scheinwerfer des Fahrzeugs sein. Durch eine Nutzung der Scheinwerfer des Fahrzeugs kann der Bewegungspfad durch das Fahrzeug selbst markiert werden.

Das Steuersignal kann auch dazu ausgebildet sein, zumindest eine fahrzeugexterne Beleuchtungseinrichtung als die Fahrbahnmarkierungsvorrichtung anzusteuern. Bei der fahrzeugexternen Beleuchtungseinrichtung kann es sich beispielsweise um eine ortsfeste Straßenbeleuchtungseinrichtung oder eine leuchtfähige Fahrbahnoberfläche handeln. Die Straßenbeleuchtungseinrichtung kann dazu ausgebildet sein, ansprechend auf das Steuersignal ein Lichtmuster abzustrahlen, das den Bewegungspfad hervorhebt. Unter einer leuchtfähigen Fahrbahnoberfläche kann eine Fahrbahnoberfläche verstanden werden, die steuerbare Lichtquellen und/oder Lichtaustrittspunkte aufweist, und dazu ausgebildet ist, ansprechend auf das Steuersignal ein Lichtmuster abzustrahlen, das den Bewegungspfad hervorhebt. Das Steuersignal kann von dem Fahrzeug beispielsweise mittels eines Senders drahtlos an einen Empfänger der Fahrbahnmarkierungsvorrichtung übertragen werden. Durch eine Verwendung von Infrastruktur zum Markieren des Bewegungspfads kann der Bewegungspfad besonders deutlich hervorgehoben werden. Da die Infrastruktur entlang der Straße verteilt sein kann, kann der Bewegungspfad auch weit vor dem Fahrzeug mit einer hohen Lichtintensität dargestellt werden.

Das Steuersignal kann ferner dazu ausgebildet sein, zumindest einen Scheinwerfer zumindest eines Fremdfahrzeugs als die Fahrbahnmarkierungsvorrichtung anzusteuern. Durch eine Verwendung von Scheinwerfern anderer Fahrzeuge zum Markieren des Bewegungspfads kann der Bewegungspfad unabhängig von Infrastruktur in großer Entfernung und auch seitlich vor dem Fahrzeug dargestellt werden. Das Fremdfahrzeug ist ausgebildet, um das Steuersignal von dem Fahrzeug zu empfangen und ansprechend auf das Steuersignal den Bewegungspfad des Fahrzeugs hervorheben. Fahrzeugscheinwerfer an dem Fremdfahrzeug sind so angeordnet, dass sie ein Sichtfeld eines Fahrers des Fremdfahrzeugs beleuchten können. Dadurch wird der erwartete Bewegungspfad des Fahrzeugs dort hervorgehoben, wo ein Informationsbedarf und -nutzen groß ist, nämlich im Sichtfeld des Fahrers des Fremdfahrzeugs.

Die Information über das Umfeld kann einen Straßenverlauf, erkannte Hindernisse, Wetterverhältnisse und zusätzlich oder alternativ Straßenverhältnisse umfassen. Dadurch kann der Bewegungspfad unter Berücksichtigung dieser Faktoren ermittelt werden. Beispielsweise kann eine verringerte Reibung zwischen Rad und Straße bei Nässe berücksichtigt werden. Nässe auf der Fahrbahnoberfläche kann auch eine Orientierung für den Fahrer des Fahrzeugs erschweren. Bei erschwerter Orientierung kann der Bewegungspfad als Empfehlung für den Fahrer verwendet werden. Bei der Bestimmung des Bewegungspfads können beispielsweise Daten eines Navigationsgeräts berücksichtigt werden.

Das Verfahren kann einen Schritt des Empfangens von Verkehrsdaten von zumindest einem Fremdfahrzeug oder von Personen, welche Ego-Objektinformationen senden umfassen, wobei im Schritt des Ermittelns die Verkehrssituation ferner unter Verwendung der Verkehrsdaten ermittelt wird. Die Verkehrsdaten können über eine Schnittstelle zu dem Fremdfahrzeug empfangen werden. Die Verkehrsdaten können die Verkehrssituation aus einem Blickwinkel des Fremdfahrzeugs repräsentieren. Die Verkehrsdaten können auch Parameter des Fremdfahrzeugs, beispielsweise eine Position, Fahrtrichtung und Fahrgeschwindigkeit, umfassen. Unter zu Hilfenahme der Verkehrsdaten kann die Verkehrssituation vorausschauend, etwa um Kurven herum, erfasst werden. Auch kann eine voraussichtliche Bewegungsbahn des Fremdfahrzeugs bei der Bestimmung des erwarteten Bewegungspfads berücksichtigt werden.

Der erwartete Bewegungspfad kann im Schritt des Bestimmens unter Verwendung einer Geschwindigkeit des Fahrzeugs und/oder einer Richtung des Fahrzeugs bestimmt werden. Durch solche Fahrzeugparameter kann der Bewegungspfad mit einer höheren Genauigkeit ermittelt werden, als ohne. Damit kann ein Unsicherheitsfaktor beim Ermitteln verringert werden und der Bewegungspfad mit geringerem Sicherheitsabstand an Hindernissen und Fremdfahrzeugen vorbeigelegt werden.

Die vorliegende Erfindung schafft ferner ein Verfahren zum Hervorheben eines erwarteten Bewegungspfads eines Fahrzeugs, durch eine in dem Umfeld des Fahrzeugs angeordnete Fahrbahnmarkierungsvorrichtung, wobei das Verfahren die folgenden Merkmale aufweist:
Empfangen eines Steuersignals gemäß dem hier vorgestellten Ansatz über eine Schnittstelle zu dem Fahrzeug; und
Ansteuern der Fahrbahnmarkierungsvorrichtung unter Verwendung des Steuersignals, um den erwarteten Bewegungspfad hervorzuheben.

Bei der Fahrbahnmarkierungsvorrichtung kann es sich beispielsweise um eine Vorrichtung zur Straßenbeleuchtung handeln. Unter der Schnittstelle kann eine Empfangseinrichtung zum Empfangen des drahtlos übertragen Steuersignals verstanden werden. Durch ein Hervorheben des Bewegungspfads des Fahrzeugs kann der Bewegungspfad des Fahrzeugs in einem größeren Umkreis um das Fahrzeug markiert werden, als durch das Fremdfahrzeug selber. Die in dem Umfeld des Fahrzeugs angeordnete Fahrbahnmarkierungsvorrichtung kann auch in einem Fremdfahrzeug angeordnet sein. In diesem Fall kann der erwartete Bewegungspfad des Fahrzeugs speziell für den Fahrer des Fremdfahrzeugs dargestellt werden.

Ferner schafft die vorliegende Erfindung ein Steuergerät zum Hervorheben eines erwarteten Bewegungspfads eines Fahrzeugs, wobei das Steuergerät die folgenden Merkmale aufweist:
eine Einrichtung zum Ermitteln einer Verkehrssituation unter Verwendung einer Information über ein Umfeld des Fahrzeugs;
eine Einrichtung zum Bestimmen des erwarteten Bewegungspfads basierend auf der Verkehrssituation; und
eine Einrichtung zum Bereitstellen eines Steuersignals zum Ansteuern einer Fahrbahnmarkierungsvorrichtung unter Verwendung des Bewegungspfads, um den erwarteten Bewegungspfad hervorzuheben.

Auch durch diese Ausführungsvariante der Erfindung in Form eines Steuergeräts kann die der Erfindung zugrunde liegende Aufgabe schnell und effizient gelöst werden. Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard-und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Das Steuergerät oder eine entsprechende ausgeführte Vorrichtung kann innerhalb des Fahrzeugs oder außerhalb des Fahrzeugs angeordnet sein. Ist das Steuergerät außerhalb des Fahrzeugs angeordnet, so kann das Steuergerät über eine geeignete Schnittstelle, beispielsweise eine Funkverbindung, mit dem Fahrzeug gekoppelt sein.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird nachstehend anhand der beigefügten Zeichnungen beispielhaft näher erläutert. Es zeigen:
- Fig. 1: eine schematische Darstellung eines Fahrzeugs mit einem Steuergerät zum Hervorheben eines erwarteten Bewegungspfads eines Fahrzeugs gemäß einem Ausführungsbeispiel der vorliegenden Erfindung;
- Fig. 2: ein Ablaufdiagramm eines Verfahrens zum Hervorheben eines erwarteten Bewegungspfads eines Fahrzeugs gemäß einem Ausführungsbeispiel der vorliegenden Erfindung;
- Fig. 3: eine Darstellung eines Fahrzeugs in einer schwierigen Verkehrssituation mit einem hervorgehobenen Bewegungspfad gemäß einem Ausführungsbeispiel der vorliegenden Erfindung; und
- Fig. 4: eine beleuchtete Straße mit Fahrzeugen im Stau stehend, wobei eine Beleuchtung vom Fahrzeug durch Information der Ausweichtrajektorie gemäß einem Ausführungsbeispiel der vorliegenden Erfindung an die intelligente Straßenbeleuchtung gesteuert wird.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

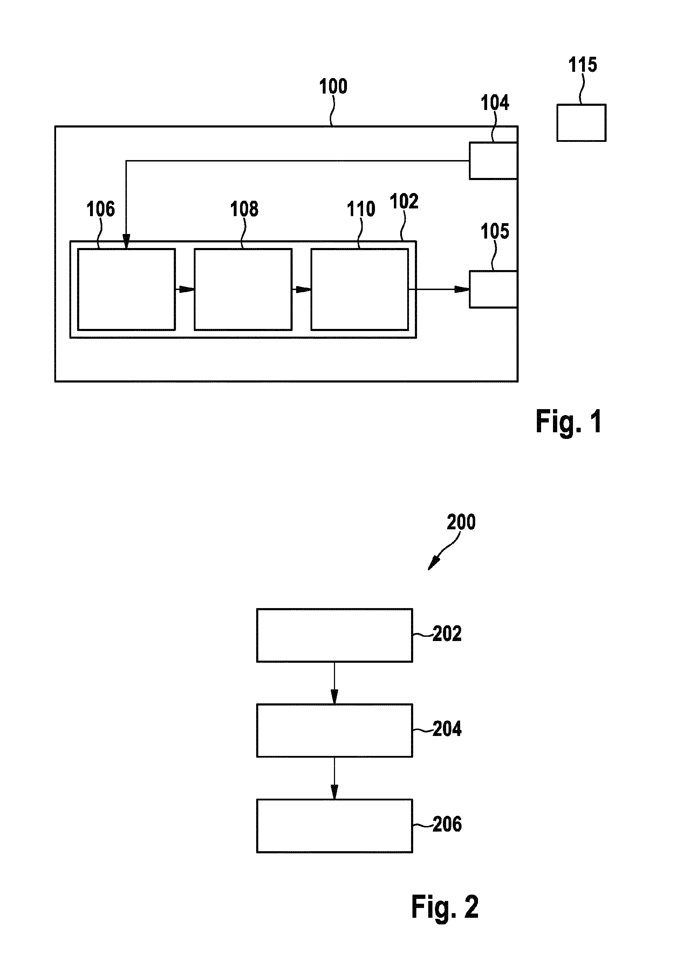

Fig. 1 zeigt eine Darstellung eines Fahrzeugs 100 mit einem Steuergerät 102 zum Hervorheben eines erwarteten Bewegungspfads des Fahrzeugs 100 gemäß einem Ausführungsbeispiel der vorliegenden Erfindung. Das Fahrzeug 100 weist eine Vorrichtung 104 zum Empfangen von Informationen über ein Umfeld des Fahrzeugs 100 auf. Bei der Vorrichtung 104 kann es sich um eine Kamera des Fahrzeugs 100 handeln. Das Steuergerät 102 ist ausgebildet, um basierend auf der Information über das Umfeld des Fahrzeugs 100 und gegebenenfalls Fahrparametern des Fahrzeugs 100 einen erwarteten Bewegungspfad des Fahrzeugs 100 zu bestimmen und ein geeignetes Steuersignal zur Ansteuerung einer Fahrbahnmarkierungseinrichtung zu erzeugen und auszugeben. Das Steuersignal ist ausgebildet, um die Fahrbahnmarkierungseinrichtung so anzusteuern, dass der erwartete Bewegungspfad durch die Fahrbahnmarkierungseinrichtung hervorgehoben wird. Gemäß diesem Ausführungsbeispiel ist das Fahrzeug 100 ausgebildet, um den erwarteten Bewegungspfad mittels eines Scheinwerfers 105 des Fahrzeugs 100 hervorzuheben. Beispielsweise kann ein vor dem Fahrzeug 100 liegender Abschnitt der Fahrbahn durch den Scheinwerfer 105 so ausgeleuchtet werden, dass der erwartete Bewegungspfad sowohl für den Fahrer des Fahrzeugs 100 als auch für weitere Verkehrsteilnehmer ersichtlich ist. Das Fahrzeug 100 kann dem erwarteten Bewegungspfad folgen, und zwar gesteuert durch ein Fahrerassistenzsystem oder gesteuert durch den Fahrer des Fahrzeugs 100. Wird das Fahrzeug durch ein Fahrerassistenzsystem gesteuert, so kann das Hervorheben des erwarteten Bewegungspfads der Warnung oder Information anderer Verkehrsteilnehmer dienen. Wird das Fahrzeug durch den Fahrer gesteuert, so kann das Hervorheben des erwarteten Bewegungspfads zusätzlich als Hilfestellung für den Fahrer dienen.

Gemäß diesem Ausführungsbeispiel weist das Steuergerät 102 eine Einrichtung 106 zum Ermitteln, eine Einrichtung 108 zum Bestimmen sowie eine Einrichtung 110 zum Bereitstellen auf. Die Einrichtung 106 zum Ermitteln ist dazu ausgebildet, unter Verwendung der von der Vorrichtung 104 bereitgestellten Information über das Umfeld des Fahrzeugs 100 eine das Umfeld des Fahrzeugs 100 betreffende Verkehrssituation zu ermitteln. Die Einrichtung zum Bestimmen 108 ist ausgebildet, um basierend auf der ermittelten Verkehrssituation den zukünftig erwarteten Bewegungspfad des Fahrzeugs 100 zu bestimmen. Die Einrichtung zum Bereitstellen 110 ist dazu ausgebildet, unter Verwendung des erwarteten Bewegungspfads das Steuersignal zum Ansteuern der Fahrbahnmarkierungseinrichtung, hier des Scheinwerfers 105, zu erzeugen und bereitzustellen.

Gemäß einem Ausführungsbeispiel kann eine alternative oder zusätzliche Fahrbahnmarkierungseinrichtung 115 außerhalb des in Fig. 1 gezeigten Fahrzeugs 100 angeordnet sein. In diesem Fall kann das Steuergerät 102 des Fahrzeugs 100 ausgebildet sein, um das Steuersignal oder eine Information über den erwarteten Bewegungspfad des Fahrzeugs 100 an eine Schnittstelle zur Übertragung an die externe Fahrbahnmarkierungseinrichtung 115 bereitzustellen. Die externe Fahrbahnmarkierungseinrichtung 115 kann ausgebildet sein, um das Steuersignal oder die Information über den erwarteten Bewegungspfad zu empfangen und ansprechend darauf den erwarteten Bewegungspfad des Fahrzeugs 100 hervorzuheben 115. Zusätzlich kann der externen Fahrbahnmarkierungseinrichtung 115 von dem Fahrzeug 100 eine Information über eine aktuelle Position des Fahrzeugs 100 übermittelt werden. Alternativ kann die externen Fahrbahnmarkierungseinrichtung 115 eine Einrichtung zur Erfassung der aktuellen Position des Fahrzeugs 100 aufweisen. Die aktuelle Position kann als Ausgangspunkt für den erwarteten Bewegungspfad des Fahrzeugs 100 dienen.

Fig. 2 zeigt ein Ablaufdiagramm eines Verfahrens 200 zum Hervorheben eines erwarteten Bewegungspfads eines Fahrzeugs gemäß einem Ausführungsbeispiel der vorliegenden Erfindung. Das Verfahren 200 kann auf einem Steuergerät, wie es in Fig. 1 dargestellt ist, ausgeführt werden. Das Verfahren 200 weist einen Schritt des Ermittelns 202, einen Schritt des Bestimmens 204 sowie einen Schritt des Bereitstellens 206 auf. Im Schritt des Ermittelns 202 wird unter Verwendung einer Information über ein Umfeld des Fahrzeugs eine Verkehrssituation ermittelt. Im Schritt des Bestimmens 204 wird, basierend auf der Verkehrssituation, der erwartete Bewegungspfad bestimmt. Im Schritt des Bereitstellens 206 wird ein Steuersignal zum Ansteuern einer Fahrbahnmarkierungsvorrichtung unter Verwendung des Bewegungspfads bereitgestellt, um den erwarteten Bewegungspfad hervorzuheben.

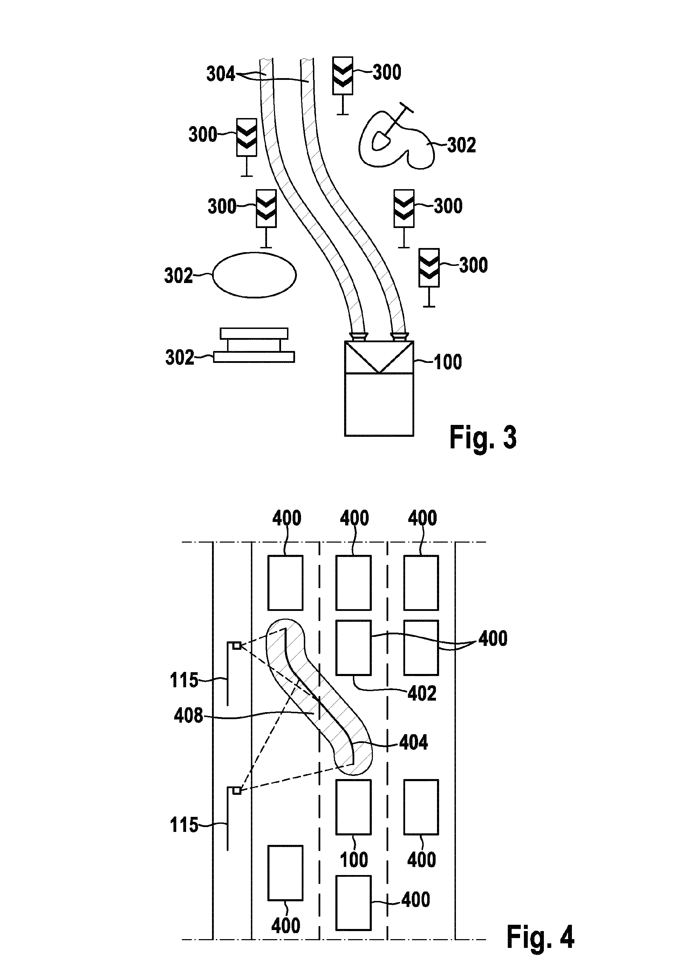

Fig. 3 zeigt eine Darstellung eines Fahrzeugs 100 in einer Verkehrssituation "Baustelle", gemäß einem Ausführungsbeispiel der vorliegenden Erfindung. Die Baustelle weist Leiteinrichtungen 300 auf, hier Warnbaken, die eine Fahrspur vor dem Fahrzeug 100 seitlich begrenzen. Die so begrenzte Fahrspur führt zwischen Hindernissen 302 hindurch. Aufgrund der, bei Nacht stark reflektierenden Warnbaken 300 und einer weiteren Sichtbehinderung durch die Hindernisse 302 ist es für einen Fahrer des Fahrzeugs 100 schwierig die Fahrspur auszumachen. Über eine Umfelderfassungseinrichtung, beispielsweise die anhand von Fig. 1 beschriebene Kamera, wird ein Umfeld des Fahrzeugs 100 erfasst. Eine geeignete Vorrichtung des Fahrzeugs 100, beispielsweise das anhand von Fig. 1 beschriebene Steuergerät, ist ausgebildet, um basierend auf von der Umfelderfassungseinrichtung bereitgestellten Informationen eine Information zum Hervorheben eines erwarteten Bewegungspfads 304 des Fahrzeugs 100 zu ermitteln. Während des Ermittelns des erwarteten Bewegungspfads 304 wird die Fahrspur als befahrbar erkannt. Die Fahrspur wird somit als der erwartete Bewegungspfad 304 bestimmt und ein Steuersignal für Scheinwerfer des Fahrzeugs 100 bereitgestellt. Das Steuersignal ist dazu ausgebildet, die Scheinwerfer so anzusteuern, dass die Scheinwerfer den erwarteten Bewegungspfad 304 als Abbildung von Reifenspuren auf die Fahrbahn projizieren. Durch die projizierten Reifenspuren kann der Fahrer des Fahrzeugs 100 einfach und sicher die Fahrspur ausmachen und der Fahrspur folgen. Alternativ oder zusätzlich zur Darstellung der Reifenspuren können die Scheinwerfer so angesteuert werden, dass eine andere geeignete Spurführungslinie oder der Fahrbahnverlauf bzw. die Fahrspur hervorgehoben wird.

Mit anderen Worten zeigt Fig. 3 eine Darstellung eines Spurlinienlichts, das durch ein Verfahren zur Erzeugung einer Spurführung 304 durch Licht gemäß einem Ausführungsbeispiel der vorliegenden Erfindung erzeugt wird. Aufgrund einer komplexen oder schwer erkennbaren Fahrspur ergibt sich eine erschwerte Orientierung zur Fahrspurführung. Derartige Situationen werden z.B. bei ungewohnten Fahrspuränderungen, z.B. durch Baustellen, hervorgerufen, können jedoch auch z.B. in komplexen Kreuzungssituationen auftreten. Weiterhin erschwert werden solche Situationen z.B. durch schlechte Sicht oder auch durch selbst hervorgerufene oder fremde Blendungen. Typische Indikatoren für eine solche Situation sind beispielsweise Nacht, Regen, eine Vielzahl von ungeordneten Baustellenbeleuchtungen, verschiedene Reflexionen, andere Verkehrsteilnehmer und nicht mehr erkennbare Spurmarkierungen bzw. ein irreführender Verlauf der Fahrspur. D.h. vorhandene Spurmarkierungspfade und Objekte erzeugen einen Konflikt in der Fahrführung.

Betroffen sind hier vor allem Menschen mit Nachtsehschwäche und schwacher Orientierungsleistung in komplexen Situationen, z.B. ältere Fahrer. Zur Unterstützung des Fahrers werden vermehrt Umfeldsensoriksysteme wie Videosensoriksysteme oder Radarsensoriksysteme oder weitere Systeme, wie TOF (time of flight - wie PMD) in Fahrzeugen eingesetzt. Zusätzlich kann auf eine Fahrzeug zu Fahrzeug Kommunikation oder auf eine Fahrzeug zu Infrastruktur Kommunikation zugegriffen werden, um Umfeldinformationen zu erhalten. Weiterhin kann auf Fahrzeugstraßenbeleuchtungssysteme, beispielsweise Scheinwerfer, mit der Fähigkeit einer variablen Lichtpositionierung und variablen Intensitätseinstellung, also einer variablen Lichtstrahlrichtung, als Fahrbahnmarkierungseinrichtung zurückgegriffen werden.

Ein Verfahren gemäß dem hier vorgestellten Ansatz erkennt eine erschwerte Orientierung zur Fahrspurführung aufgrund komplexer oder schwer erkennbarer Fahrspurmarkierungen. Weiterhin wird eine erschwerte Sicht erkannt, die beispielsweise aufgrund von Wetterverhältnissen oder auch durch Blendungen hervorgerufen wird. Aus diesen Informationen werden gemäß dem Verfahren typische Spurführungsmerkmale und für die Spurführung relevante Objekte ermittelt.

Daraufhin wird eine Wahrscheinlichkeit eingeschätzt, die einen Unterstützungsbedarf des Fahrers zur Spurführung repräsentiert. Auf Basis von typischen Spurführungsmerkmalen und erkannten Objekten wird eine Spurführung für eine Fahrspur mit maximaler Wahrscheinlichkeit eingeschätzt. Sollte die eingeschätzte Wahrscheinlichkeit eine Unterstützung befürworten und sollte die eingeschätzte Wahrscheinlichkeit eine belastbare Führungsempfehlung rechtfertigen, so erzeugt das Lichtsystem eine durch Lichtfokussierung dargestellte Fahrempfehlung für den Fahrer, z.B. durch eine Andeutung von Reifenlinien, wie es in Fig. 3 dargestellt ist.

Fig. 4 zeigt eine Ansteuerung einer intelligenten Straßenbeleuchtung zur Warnung von Verkehrsteilnehmern 400 bei einer automatischen oder fahrergesteuerten Ausweichaktion eines Fahrzeuges 100, gemäß einem Ausführungsbeispiel der vorliegenden Erfindung. Das Fahrzeug 100 bewegt sich auf einer mehrspurigen Straße, auf der sich weitere Verkehrsteilnehmern 400 befinden. Auf der Straße befinden sich zwei Reihen aus stehenden Fahrzeugen 400. In der ersten Reihe befinden sich nebeneinander drei Fahrzeuge 400. In der zweiten Reihe befinden sich nebeneinander zwei Fahrzeuge 400, wobei sich eines der Fahrzeuge 400 in der Fahrspur des Fahrzeugs 100 befindet. Durch die stehenden Fahrzeuge 400 wird ein Stauende 402 markiert. Neben dem Fahrzeug 100 bewegt sich ein weiteres Fahrzeug 400 auf das Stauende zu. Zwei weitere sich bewegende Fahrzeuge 400 folgen dem Fahrzeug 100.

Beim Auffahren auf das Stauende 402 kann das Fahrzeug 100, ausgestattet mit entsprechender Sensorik, z.B. Radar, Video, Lidar oder Geschwindigkeitssensorik, erkennen, ob der Bremsweg ausreicht, um eine Kollision mit einem am Stauende 402 stehenden Fahrzeug 400 zu vermeiden. Wenn dies nicht möglich ist, kann durch Berechnung einer Ausweichtrajektorie 404 ein Ausweichen vom Fahrzeug 100 selbst oder vom Fahrer ausgelöst werden. Dies ist aber vom nachfolgenden Verkehr 400 nicht frühzeitig ersichtlich. Ein automatisches Ausweichen des Fahrzeuges 100, ohne die anderen Verkehrsteilnehmer 400 zu warnen, ist jedoch gefährlich. Eine Warnung durch Blinken ist in einer derartigen Stresssituation nur sehr schwer vom Fahrer eines nachfolgenden Fahrzeugs 400 erfassbar. Daher werden nachfolgende Fahrzeuge 400 gemäß diesem Ausführungsbeispiel mit einer Anzeige der Ausweichrichtung, in die sich das Fahrzeug 100 bewegen wird, gewarnt.

Anderen Verkehrsteilnehmern 400 wird eine von dem Fahrzeug 100 zur Verhinderung eines Unfalls berechnete Ausweichtrajektorie 404 durch eine Beleuchtung 408 kenntlich gemacht. Die Beleuchtung 408 der Ausweichtrajektorie 404 kann dabei entweder durch die eigenen Scheinwerfer des Fahrzeugs 100, wie anhand von Fig. 3 beschrieben, durch eine intelligente Straßenbeleuchtung 115 mit Kommunikationsfähigkeit oder durch andere Fahrzeuge 400 erfolgen. Dabei kann die Ausweichtrajektorie auch durch eine Kombination dieser Möglichkeiten zur Hervorhebung des erwarteten Bewegungspfads des Fahrzeugs 100 hervorgehoben werden.

Bei einer Beleuchtung 408 durch eine intelligente Straßenbeleuchtung 115 wird die von dem Fahrzeug 100 berechnete Ausweichtrajektorie 404 an die intelligente Straßenbeleuchtung 115 mitgeteilt. Dies kann durch Funksysteme, wie beispielsweise Wireless LAN, erreicht werden. Die intelligente Straßenbeleuchtung 115 kann basierend auf der berechneten Ausweichtrajektorie einen vom Fahrzeug 100 berechneten Fahrschlauch 404 besonders ausleuchten, um damit auch andere Verkehrsteilnehmer 400, insbesondere den nachfolgenden Verkehr, aber auch Personen am Straßenrand oder den Gegenverkehr, von der Intention des Ausweichens in Kenntnis zu setzen. Zusätzlich können auch die nachfolgenden Fahrzeuge 400 per Car2Car Kommunikation in Kenntnis gesetzt werden, um ein automatisches Bremsen der nachfolgenden Fahrzeuge 400 zu ermöglichen.

Eine intelligente Straßenbeleuchtung 115 kann jegliche Art von Straßenbeleuchtung 115 umfassen, inklusive Straßenlaternen und selbstleuchtenden Oberflächen der Straße, oder auch durch eine Straße mit steuerbarer selbstleuchtender Oberfläche realisiert sein. Die notwendige Information für die Straßenbeleuchtung 408 ist die im Fahrzeug ermittelte Ausweichtrajektorie 404.

Bei einer Beleuchtung 408 durch die eigenen Scheinwerfer wird die berechnete Ausweichtrajektorie 404 mit den fahrzeugeigenen Scheinwerfern auf die Straße geleuchtet. Dieses kann bei Scheinwerfern durch das Kurvenlicht oder eine Ausblendung von Bereichen umgesetzt sein. So wie sich das eigene Fahrzeug 100 den Weg 404 leuchten kann, ist es möglich, dass das eigene Fahrzeug 100, für fremde Fahrzeuge 400 einen Weg leuchten kann. In diesem Fall kann das Fahrzeug 100 von einem anderen Fahrzeug 400 ein entsprechendes Steuersignal empfangen.

Durch die Hervorhebung des zu erwartenden Bewegungspfads 404 werden die nachfolgenden Fahrzeuge 400, bzw. deren Fahrer, optisch durch die Beleuchtung 408 gewarnt, dass dieser Bereich nicht mehr zum eigenen Befahren zur Verfügung steht, da der durch die Beleuchtung 408 hervorgehobene Bereich durch das Fahrzeug 100 genutzt wird. Auffahrunfälle können so vermieden werden.

Weitere Informationen kann das Fahrzeug 100 von Fahrzeugen 400 mit Sensorik zur Erkennung eines möglichen Unfalls über die Möglichkeit der Kommunikation der Fahrzeuge 400 zur Umwelt oder zur Infrastruktur (Car2X) erhalten. Eine steuerbare intelligente Straßenbeleuchtung 115 kann zum Beispiel wenig genutzte Straßen nur dann auszuleuchten, wenn diese auch benutzt werden. Steuerbare Scheinwerfer des Fahrzeuges 100, z.B. Kurvenlicht oder Zusatzscheinwerfer für eine extra Beleuchtung bestimmter Bereiche oder Straßenabschnitte, können entsprechende Straßenbereiche hervorheben.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

## Patentansprüche

1. Verfahren (200) zum Hervorheben eines erwarteten Bewegungspfads (304; 404) eines Fahrzeugs (100), wobei das Verfahren (200) die folgenden Schritte umfasst:
Ermitteln (202) einer Verkehrssituation unter Verwendung einer Information über ein Umfeld des Fahrzeugs (100);
Bestimmen (204) des erwarteten Bewegungspfads (304; 404) basierend auf der Verkehrssituation; und
Bereitstellen (206) eines Steuersignals zum Ansteuern einer Fahrbahnmarkierungsvorrichtung (105, 115) unter Verwendung des Bewegungspfads (404), um den erwarteten Bewegungspfad (304; 404) hervorzuheben.

2. Verfahren (200) gemäß Anspruch 1, bei dem das Steuersignal dazu ausgebildet ist, zumindest ein Scheinwerfer des Fahrzeugs (100) als die Fahrbahnmarkierungsvorrichtung (105) anzusteuern.

3. Verfahren (200) gemäß einem der vorangegangenen Ansprüche, bei dem das Steuersignal dazu ausgebildet ist, zumindest eine fahrzeugexterne Beleuchtungseinrichtung (115) als die Fahrbahnmarkierungsvorrichtung anzusteuern.

4. Verfahren (200) gemäß einem der vorangegangenen Ansprüche, bei dem das Steuersignal dazu ausgebildet ist, zumindest einen Scheinwerfer zumindest eines Fremdfahrzeugs (400) als die Fahrbahnmarkierungsvorrichtung anzusteuern.

5. Verfahren (200) gemäß einem der vorangegangenen Ansprüche, bei dem die Information über das Umfeld einen Straßenverlauf und/oder erkannte Hindernisse (300, 302) und/oder Wetterverhältnisse und/oder Straßenverhältnisse umfasst.

6. Verfahren (200) gemäß einem der vorhergehenden Ansprüche, mit einem Schritt des Empfangens von Verkehrsdaten von zumindest einem Fremdfahrzeug (400) oder von Personen, welche Ego-Objektinformationen senden, wobei im Schritt des Ermittelns (202) die Verkehrssituation ferner unter Verwendung der Verkehrsdaten ermittelt wird.

7. Verfahren (200) gemäß einem der vorangegangenen Ansprüche, bei dem im Schritt des Bestimmens (204) der erwartete Bewegungspfad (304; 404) ferner unter Verwendung einer Geschwindigkeit des Fahrzeugs (100) und/oder einer Richtung des Fahrzeugs (100) bestimmt wird.

8. Verfahren zum Hervorheben eines erwarteten Bewegungspfads eines Fahrzeugs (400), durch eine in dem Umfeld des Fahrzeugs (400) angeordnete Fahrbahnmarkierungsvorrichtung (115), wobei das Verfahren die folgenden Schritte umfasst:
Empfangen eines Steuersignals gemäß einem der Ansprüche 1 bis 7 über eine Schnittstelle (112) zu dem Fahrzeug (400); und
Ansteuern der Fahrbahnmarkierungsvorrichtung (115) unter Verwendung des Steuersignals, um den erwarteten Bewegungspfad (404) des Fahrzeugs hervorzuheben.

9. Steuergerät (102) zum Hervorheben eines erwarteten Bewegungspfads (404) eines Fahrzeugs (100), wobei das Steuergerät (102) die folgenden Merkmale aufweist:
eine Einrichtung zum Ermitteln (106) einer Verkehrssituation unter Verwendung einer Information über ein Umfeld des Fahrzeugs (100);
eine Einrichtung zum Bestimmen (108) des erwarteten Bewegungspfads (304; 404) basierend auf der Verkehrssituation; und
eine Einrichtung zum Bereitstellen (110) eines Steuersignals zum Ansteuern einer Fahrbahnmarkierungsvorrichtung (105, 115) unter Verwendung des erwarteten Bewegungspfads (304; 404), um den erwarteten Bewegungspfad (304; 404) hervorzuheben.

10. Computer-Programmprodukt mit Programmcode zur Durchführung des Verfahrens nach einem der Ansprüche 1 bis 8, wenn das Programm auf einer Vorrichtung ausgeführt wird.
